(19) Europäisches Patentamt

European Patent Office

Office européen des brevets

(11) **EP 1 093 310 A2**

(12) **EUROPEAN PATENT APPLICATION**

(43) Date of publication:
**18.04.2001 Bulletin 2001/16**

(51) Int. Cl.[7]: **H04Q 1/46**

(21) Application number: **00305558.9**

(22) Date of filing: **03.07.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **28.09.1999 US 407195**

(71) Applicant:
**Nortel Networks Limited
Montreal, Quebec H2Y 3Y4 (CA)**

(72) Inventor: **Ahmadi, Masoud
Harlow, Essex CM17 9PH (GB)**

(74) Representative:
**Cutforth, Peter Nicholas et al
Nortel Networks
Intellectual Property Law Group
London Road
Harlow, Essex CM17 9NA (GB)**

(54) **Tone detection using neural network**

(57)    A tone detector for detecting a tone such a DTMF tone by converting the signal to the frequency domain, then extracting signal features to input to an artificial neural network. The neural network is trained to detect the tone, or detect which of many predetermined tones, is present. It can be arranged to operate more quickly than conventional tone detection methods. This is particularly significant for coding or compressing signals which contain tones and other information. Since it is often more efficient to code or compress such tones separately from the other information, it can be essential to detect and separate such tones very quickly to avoid the risk of a single tone being coded or compressed twice, particularly if the signal is delay sensitive. A telephone conversation is an example.

*Fig. 1*

Printed by Xerox (UK) Business Services
2.16.7 (HRS)/3.6

EP 1 093 310 A2

## Description

### RELATED APPLICATIONS

This application relates to copending US patent application serial no..........(Nortel Networks reference no 10639ID) entitled "TONE DETECTION USING PITCH PERIOD", filed August..... 1999 and to copending US patent application serial no.........(Nortel Networks reference no 10641ID) entitled "NOISE DETECTION USING PITCH PERIOD", filed August..... 1999, both hereby incorporated by reference in their entirety.

### FIELD OF THE INVENTION

The invention relates to tone detectors, to signal coders, to methods of providing a telecommunication service, to methods of using a telecommunication service, to data structures comprising a set of weighting coefficients for use in an artificial neural network, and to corresponding software, including software for detecting a tone.

### BACKGROUND OF THE INVENTION

Tone detection has a variety of applications in telecommunications systems. Tones can be used for transmitting data, or for signalling purposes for example. They can include pure tones such as fax, modem, dial tone, continuity tone as well as multi-frequency tones such as DTMF (Dual Tone Multi-Frequency), R1 and R2 signalling. In this context, the term "tone" is not intended to encompass tones occurring as part of human speech, for example in tonal languages such as Chinese.

Accurate detection of tones may be critical for maintaining low error rates for data transmission, or for proper operation of switches or other network equipment which relies on signalling tones. Particularly where tones are carried on speech circuits, it can be difficult to distinguish the tones because speech may show the same frequencies for short periods. It can be important to recognise tones quickly, particularly in switches containing echo cancellation circuits that need to be switched off when tones are detected. An example is an adaptive echo canceller, which adapts to speech. Tones in the speech band can affect the operation of such echo cancellation circuits since they will try to alter their coefficients to adapt to the tones. This is undesirable since when speech reoccurs, the canceller will take longer to readapt to the speech, and so echoes may be heard.

Conventional DTMF detection methods use bandpass filter banks and envelope detectors to estimate the level of each of the eight possible frequency components. The frequencies with the highest levels are selected as candidates for DTMF signal. Further processing is required to discriminate real DTMF tones from voice signals or other energy in the voice band. An example is shown in proceedings of the IEEE-SP International Symposium 1994 'Detection of multi-tone signals based on energy operators', Edgar F. Velez.

It is also known to use digital signal processors (DSP) to perform evaluation of the discrete Fourier transform (DFT) of the signal using algorithms such as the Goertzel algorithm. Conventional methods may be insufficiently reliable, or take too long, or use too much computational resource.

In many cases, there is a limited amount of computing resource available to carry out tone detection operations, particularly in switches where many signals or channels are handled simultaneously. In such cases, reductions in processing requirements per channel can enable greater channel density, which may be commercially very valuable.

Speed of detection of tones is important when using a codec in such a way as to transmit tones differently to other information in the signal. The G729 standard is an example of a codec standard that can be implemented so as to avoid coding tones. Tones may code inefficiently where the coding standard is designed for speech for example. However, there is a risk that the first part of the tone is not detected and separated sufficiently quickly. In this case the first part would be encoded and transmitted along with the speech. This first part might subsequently be detected as a tone after decoding at the receiving side. The remainder of the tone would also be transmitted, as a message, then regenerated at the receiving side as a tone. This can result in mistaken detection of two distinct tones at the receiving side, when only one tone was present in the input signal. If the tones represent digits, an unwanted double digit would be detected which could cause malfunctions such as dialling a wrong number or causing wrong data entry in an IVR (interactive voice response) system

Artificial neural networks are known for pattern recognition or classification applications where analytical solutions are too difficult in terms of computational processing power, if there is a solution at all. They have not been considered for tone detection because tone detection has always been perceived as a simple problem for which conventional analytical algorithms are well-suited and well-developed.

### SUMMARY OF THE INVENTION

According to a first aspect of the invention there is provided a tone detector for detecting a tone having a pre-determined frequency profile, in an input signal, the detector comprising:

    a feature extractor for extracting signal features present in the input signal, and
    a discriminator for discriminating if the extracted features correspond to the pre-determined frequency profile, to detect the tone, wherein the discriminator comprises one or more artificial neural networks for carrying out the discriminating.

An advantage of using an artificial neural network is that it can be arranged to operate more quickly than conventional tone detection methods. This is particularly significant for coding or compressing signals which contain tones and other information. Since it is often more efficient to code or compress such tones separately from the other information, it can be essential to detect and separate such tones very quickly to avoid the risk of a single tone being coded or compressed twice as discussed above. The desire for speed is particularly pressing if the other information is delay sensitive, an example is two-way speech. For the example of DTMF detection, this method can give more than incremental speed improvements over conventional methods, it can operate many times faster than conventional methods.

**Preferred features within the scope of the invention**

Preferably the signal feature comprises frequency domain parameters indicating a frequency profile of the input signal. Using frequency domain features rather than e.g. time domain features such as zero-crossings may enable the ANN to be simpler and more accurate, or reduce the computational load.

Preferably the detector is arranged to detect multi-frequency tones. Such tones are commonly used in telephony applications.

Preferably the discriminator comprises two or more sub-discriminators, each for discriminating a subset of frequencies of the tones separately. This can enable each sub discriminator to be simpler, and less computationally intensive, and they can operate in parallel to increase the speed.

Preferably the tones comprise a multifrequency tone, the sub discriminators are arranged to discriminate separate parts of the frequency profile of the multi-frequency tone, and the detector further comprises a decoder to receive the separate parts and output an indication of which tone is detected. This can reduce the number of predetermined frequency profiles required, and can speed up the discriminating, since the separate frequency parts can be discriminated in parallel.

Preferably the multifrequency tones comprise DTMF tones.

Preferably the feature extractor is arranged to carry out a discrete cosine transform operation to determine which frequencies are present. This can increase the speed of operation of the frequency discriminator compared to other methods of determining which frequencies are present.

Preferably the artificial neural network comprises a multi-layer perceptron. This is preferred for good speed and accuracy of matching.

Preferably the detector further comprises tone discriminator for separating candidate tones from other parts of the input signal, and inputting the candidate tones to the feature extractor. This can improve the speed and accuracy of the detector.

**Other aspects of the invention**

According to another aspect of the invention there is provided a signal coder for coding signals comprising tones and other information, the coder comprising:

a tone detector as set out above for detecting the tones in the signal,
an information coder for coding the information without the tones, and
a tone coder, for coding the tones separately,
the coder being arranged to output the separately coded tones and information.

An advantage of this is that the input signal can be coded to make more efficient use of bandwidth if the tones are coded separately, and the use of the artificial neural network enables quicker detection of tones. This enables the risk of double coding of a single tone to be reduced, without introducing unwanted delay. According to another aspect of the invention there is provided a method of making a call over a telecommunications network comprising a signal coder as set out above. Other aspects of the invention provide methods of providing a telecommunications service using the tone detector or the signal coder as set out above, or methods of using the tone detector, or corresponding software.

Preferred features may be combined as appropriate, and may be combined with any of the aspects of the invention as would be apparent to a person skilled in the art.

**BRIEF DESCRIPTION OF THE DRAWINGS**

For a better understanding of the invention, and to show by way of example how it may be carried into effect, embodiments will now be described with reference to the accompanying drawings, in which:-

FIGURE 1 shows an example telecommunications network in which a tone detector can be used;
FIGURE 2 shows an example of the part of the network of Figure 1 having the tone detector, in more detail;
FIGURE 3 shows an example of the tone detector functions in more detail, in accordance with an aspect of the present invention;
FIGURE 4 shows an example of the candidate tone discrimination function of FIGURE 3;

FIGURE 5 shows an example of the tone discriminator of FIGURE 4;

FIGURE 6 shows an example of the ANN of FIGURE 4.

## DESCRIPTION OF PREFERRED EMBODIMENTS

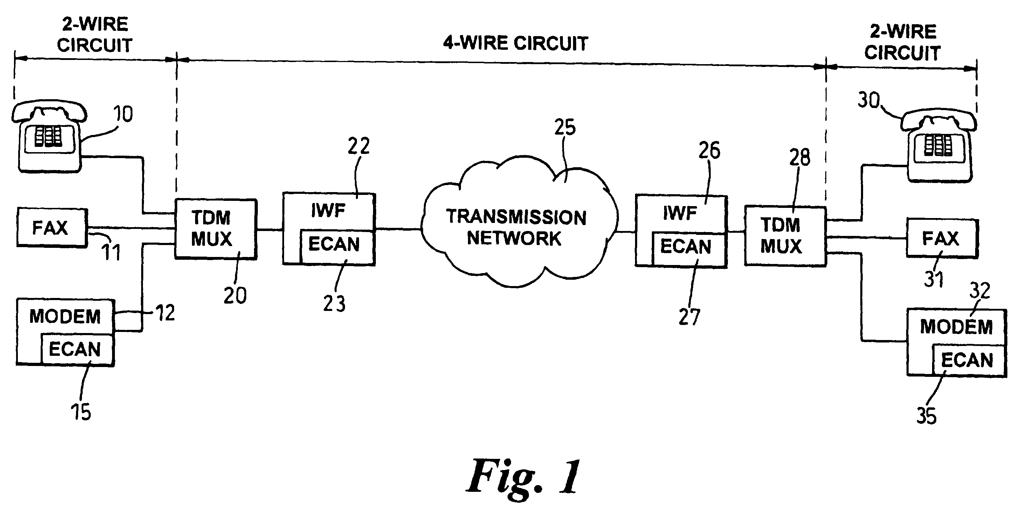

Figure 1 shows an example telecommunications network in which the tone detector can be used. User terminal equipment such as telephone 10, facsimile machine 11 and modem 12 are connected to a multiplexing unit 20. The multiplexing unit 20 receives inputs from the terminal equipment and converts this into a form in which it can be carried to a remote multiplexing equipment 28. Typically, multiplexer 20 multiplexes the inputs into a time division multiplexed output data stream such as a plesiochronous digital hierarchy (PDH) DS1 or E1 link. Nowadays it is common for transmission network 25 to be a packet-based network such as an asynchronous transfer mode (ATM), frame relay or internet protocol (IP) based network. Therefore, an interworking unit (IWF) 22 receives the time division multiplex data stream and converts it into a packet-based form in which it can be carried over transmission network 25 to a corresponding interworking unit 26 which contains the tone detector. Further user terminal equipments 30, 31 and 32 are connected to multiplexer 28. As shown in Figure 1, the path between user equipment comprises two-wire circuits and a four-wire circuit. It is impedance mismatches at the boundary between the two-wire and four-wire circuits that causes echoes. Echo cancellers are placed in the four-wire circuit to minimise echoes. Echo cancellers 23, 27 are shown incorporated in the interworking function units 22, 26. Echo cancellers may also be incorporated into the multiplexing equipment 20, 28 or PBXs. Modems 12, 32 incorporate their own echo canceller 15, 35 and therefore the network echo cancellers 23, 27 must be disabled for modem calls.

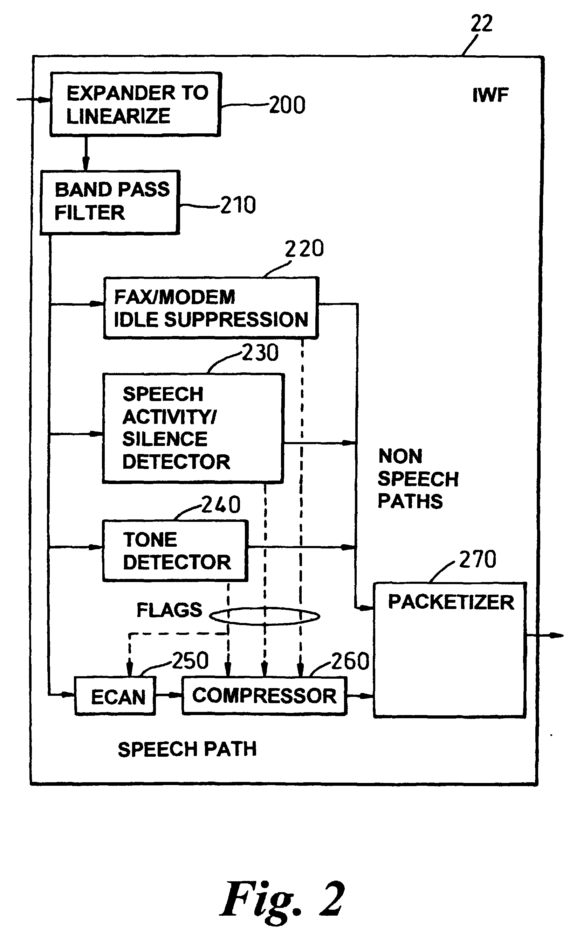

Figure 2 shows the interworking unit 22, 26 in more detail. Incoming communications traffic passes through an expander 200 to recover the original linear signal, in case it was compressed by the multiplexing unit 20 into a non-linear PCM form. At 210 the linear signal is passed through a band pass filter to minimise extreme low and high frequency energy content in the incoming audio signal (e.g 300Hz-3.4kHz pass band). The filtered signal is then passed to a number of non-speech detectors 220, 23,0, 240, and to an echo canceller (ECAN) 250.

Amongst the non-speech detectors, is a fax/modem signal detector 220. This looks for fax or modem signals which should not be compressed, and passes a flag to a signal compressor 260. The fax/modem detector also looks for an indication that the fax or modem is signalling for idle suppression. In this case, a message is output on the non-speech path to the packetiser, to send an appropriate message to the far end, instead of continuing to send sufficient packets for a full 64kb signal, when there is no information being transmitted. Another unit in the non-speech path is a speech activity/silence detector 230, which looks for silent portions within speech. There are various ways of achieving this function, e.g. by energy level detection, by zero crossing rate measurement, or by pitch period detection as discussed in the co-pending US patent application on noise detection referred to above. The speech activity/silence detector sends a flag to the compressor 260, and may output a message to be sent to the packetiser 270 to be sent to the far side, to indicate a period of silence. This may be used to trigger a comfort noise generator at the receiving side, to replace the noise not transmitted.

A further element in the non-speech path is a tone detector 240. This may output a flag to the compressor 260 and to the echo canceller 250, when a tone is detected. It is preferable particularly with adaptive echo cancellers not to try to cancel when a tone is present, as this would otherwise cause the canceller to adapt to the tones, and therefore inpair its performance in cancelling speech echoes.

The tone detector may be implemented in various ways, such as using filter banks, or Fourrier transform based methods, based on well-known principles. A further alternative is to use a pitch period based detector as described in the above referenced co-pending US patent application relating to tone detection.

If none of the non-speech detectors are activated, the signal on the speech path is output by the packetiser 270. This is fed from the compressor 260 that is fed from the echo canceller 250. The echo canceller can be implemented in various ways using well established principles, and therefore need not be described further here. The compressor 260 could be arranged to code the signal or compress the signal according to standards such as the G711, G726, or G729 standards. The packetiser 270 may be arranged to output ATM, frame relay or IP packets. Depending on the standard, and depending how the standard is implemented, the compressor may need information from the tone detector, or the speech/silence activity detector for example. The information passed may be more than a simple detection flag, depending on the implementation. Such details of implementation need not be described, as they can be designed following well established principles, and depend on the detailed requirements of the system.

The tone detector can be arranged to detect the presence of a modem's echo canceller disable tone, i.e. a 2100Hz tone with phase reversal, and a facsimile machine call setup signalling tone, which is a continuous 2100Hz tone. Should the tone detector detect the presence of an echo canceller disable tone, a flag instructs the echo canceller to disable its operation. The compressor selects an appropriate data reduction algorithm according to the traffic type that has been detected. For example, if fax or modem traffic is detected, a clear channel, i.e. no compression, is used. The presence of modem traffic or fax traffic, as determined by the presence of a 2100Hz tone, causes the detector to select the fax/modem idle suppression unit. Otherwise, the traffic is assumed to be speech traffic and a speech activity detector is used by the compressor.

In hardware terms, typically all of the blocks shown in Figure 2 would be implemented using conventional digital signal processing hardware, with associated circuitry such analogue to digital converters. A typical multi channel processor would include multiple DSP cards, each with four or more high capacity DSP chips, with associated memory and ancillary circuitry, switching means such as a bus controller to route signal streams for each channel to an appropriate card and an appropriate DSP chip.

The tone detector, compressor, and packetizer are an example of the signal coder for coding signals comprising tones and other information. The tone detector and packetizer are an example of the tone coder for coding tones separately. The compressor is an example of the information coder for coding the information without the tones.

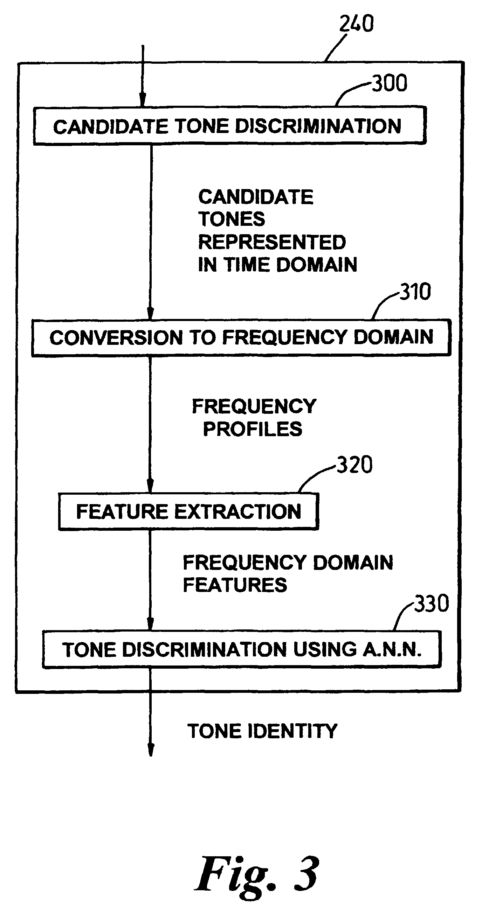

**Figure 3,** Tone detector functions in more detail

Figure 3 shows an example of some of the primary functions of the tone detector 240 shown in Figure 2, according to embodiment of the invention. The raw signal is fed to a candidate tone discrimination section 300 for isolating parts of the signal which could be tones. This is optional but desirable to reduce the amount of computational resources used, by avoiding wasting such resources trying to identify tones amongst parts of the incoming signal which clearly cannot contain tones.

The next step is conversion to frequency domain 310. Although it is possible to perform more detailed identification of tones in the time domain, using ANNs, it will often be more computationally efficient to convert to the frequency domain. This is preferably carried out using a DCT algorithm. This is preferred as being more computationally efficient than other methods such as Fourier transform based methods. DCT algorithms are well known and need not be described in more detail here. The output of stage 310 will be a frequency profile for the given sample of the incoming signal in the form of an array of DCT coefficients.

This is followed by a feature extraction stage 320. This involves selecting parts of the frequency profile for further analysis by the ANN. This would normally be a predetermined selection made according to the frequencies of interest in the tone being identified. Finally at stage 330 these selected frequency domain features, typically in the form of array of selected DCT coefficients representing signal energy levels at particular frequencies, is fed to the ANN. As will be discussed below in more detail, the ANN involves applying the array of frequency domain features to the input nodes of the neural network, and outputting an identifier indicating which of a number of predetermined tones has been recognised as being present in the incoming signal represented by the selected frequency domain features. A further output (not illustrated) may be a flag to indicate that a tone has been positively identified.

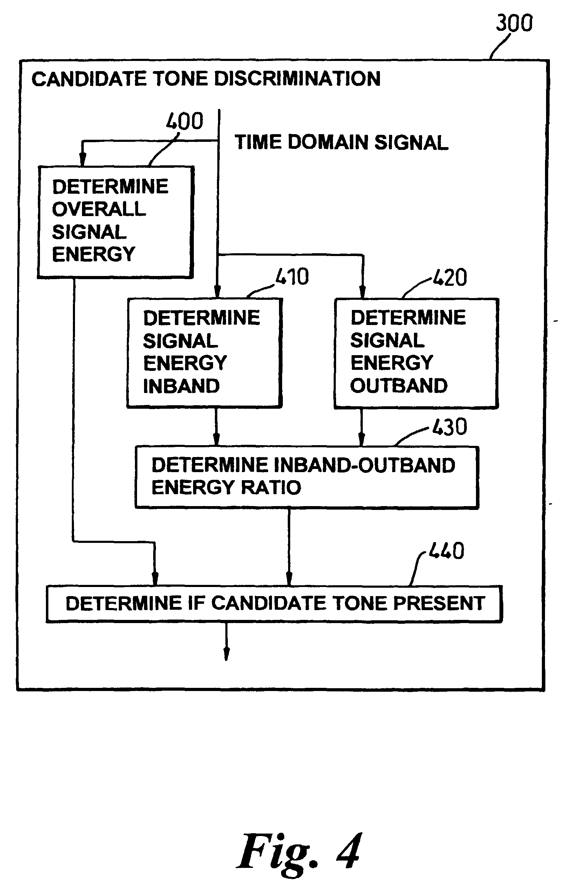

**Figure 4,** candidate tone discrimination.

Figure 4 shows in more detail an example of the candidate tone discrimination stage 300 of Figure 3. The raw incoming signal in time domain form is processed frame by frame. A typical frame might include 120 consecutive digital examples, representing 15 milliseconds of signal. A larger frame size gives better representation of average signal energy, but a shorter frame size means less delay in producing an output. Successive frames may be overlapped e.g. by two-thirds to enable quicker updating of the output, without reducing frame size. This means an output can be updated every 5 milliseconds, even though the frame size is 15 milliseconds.

At step 400 the overall signal energy is determined for the frame. In parallel, at steps 410 and 420 the signal energy inbound, and the signal energy outbound respectively, are determined. These steps can be implemented using FIR filters, though if possible, IIR filters would be preferred, having a lower number of taps, to reduce the amount of computation. Inbound refers to the frequency band in which the tones can be found. Outbound refers to the frequencies outside those of the tones.

At step 430, the inbound to outbound energy ratio is determined. This ratio and the overall signal energy are used to determine at step 440 if there is any candidate tone present The entire candidate tone discrimination section involves much less computation than the subsequent tone discrimination steps, which are only carried out if candidate tones have been identified

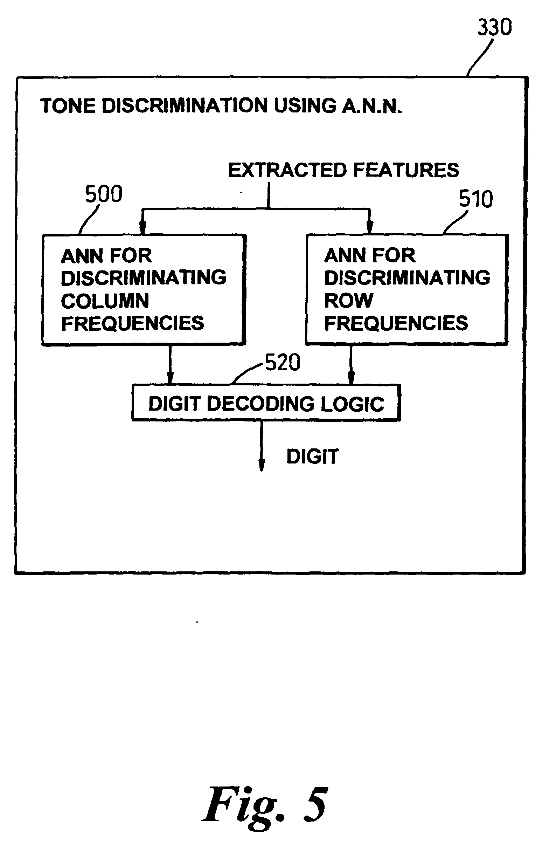

**Figure 5,** multi frequency tone discrimination

Figure 5 shows an example of an arrangement of artificial neural networks for discriminating multiple frequencies in parallel. This may be applied to discriminating DTMF tones in particular. Other arrangements of the tone discriminating using artificial neural networks, 330, as shown in Figure 3, may also be used, for single tones or multi frequencies tones.

In Figure 5, the extracted frequency domain features from stage 320 are fed directly into a pair of ANNs. ANN 500 is for discriminating column frequencies. ANN 510 is for discriminating row frequencies.

DTMF tones typically include one of 3 or 4 column frequencies, and one of 4 row frequencies. They enable each digit from a 12 or 16 digit keypad to be uniquely identified by the pair of frequencies.

Each ANN 500, 510 outputs a logic signal indicating which column frequencies and which of the predetermined row frequencies have been detected. This is fed into digit decoding logic 520 using straight forward AND and OR logic to output a representation of the digit identified uniquely by the column and row frequencies.

In hardware implementation terms, the 2 or more ANNs may be implemented on the same DSP, which would mean they would be carried out one after the other, or by multi-tasking the single processor. Alternatively, separate DSPs or other hardware could be used to enable them to be processed in parallel. The digit decoding logic could be implemented in software or hardware using conventional techniques.

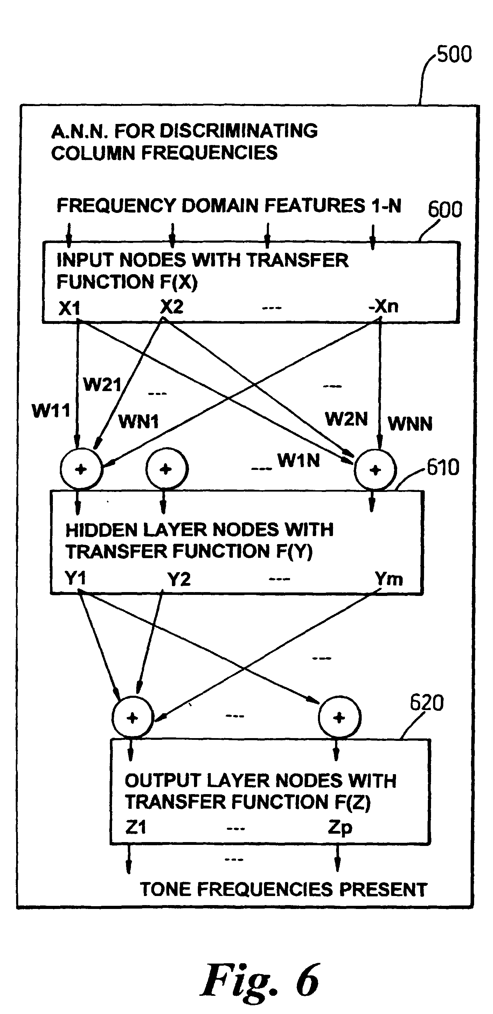

**Figure 6,** ANN for discriminating column frequencies

Figure 6 shows in more detail an ANN for use at stage 500 of Figure 5. A corresponding ANN could equally be used for discriminating both column and row frequencies, or for discriminating just row frequencies, or for discriminating single frequency tones.

The ANN illustrated is a MLP (multi layer perceptron) type. This is a static supervised ANN. It needs to be trained before use, to set weights, to calculate internal and output values.

It comprises three layers of nodes. Frequency domain features are fed directly into the first layer of input nodes 600. There is one hidden layer 610 from the layer of input nodes. The hidden layer node outputs feed an output layer of nodes 620. The output of the output layer are a logic value indicating which of a number of predetermined frequencies have been positively identified.

Performance of the ANN may be judged for this application in terms of speed of processing, amount of computational resource used, ease of training, and ability to interpolate well between training values.

To optimise the ANN, the design choices include the following:

a) which type of ANN to use, e.g. supervised or unsupervised, (MLP in the example illustrated, which is supervised)
b) number of nodes in the input layer, hidden layer and output layer respectively
c) number of hidden layers.
d) whether to use full meshing or partial meshing, and static or dynamic configuration, and
e) selection of training inputs/outputs, and selection of feed back algorithm for use in training, to determine the weights, e.g. the well known algorithm termed "backprop".

Each of these design choices will now be discussed

**A Type of ANN**

There are various well known types of ANN. The MLP is one of the most commonly used types. Other types include dynamic types which adapt to changing conditions, by changing weights, or changing configuration. The MLP can give relatively fast processing times, and reliable results, particularly when trying to identify a predetermined known feature such as tone, in an input signal which may include noise and other features.

**B Number of Nodes**

As the number of nodes has a direct impact on the amount of processing, and therefore on the speed of processing, it is preferable to keep the number of nodes to the minimum which gives the required performance. The number of nodes in the input layer should correspond to the number of input features. 15 nodes may be used in a typical example, though this may depend on the number of different frequencies which may be identified by the ANN. The number of nodes in the output layer is dictated by the number of different frequencies which are being detected. At the output layer, each node is arranged to give a logical output if its particular frequency is identified.

The number of nodes in the hidden layer may be dependant upon the degree of meshing and the accuracy/speed requirements of the application. Typically it may be approximately the same number as the number of nodes in the input layer. If there are too many hidden layer nodes, then the ANN may memorise the training inputs, and perform well only for those inputs, and may interpolate badly, i.e. perform badly for more generalised inputs. Generally the number of training input patterns should be > 10 times the total number of nodes.

**C Number of Hidden Layers**

The use of a hidden layer enables a broader range of problems to be analysed, than the simpler 2-dimensional problems that can be addressed without a hidden layer. Generally little benefit is gained by using more than one hidden layer, and in this application it is hard to justify the additional computation involved in using more than one hidden layer.

**D Full/Partial Meshing**

Full meshing means each node in a given layer is connected to the output of every node in the preceding layer. This is preferred, though good results may be obtained with partial meshing. If partial, then the ANN may be dynamic, i.e. the meshing may be varied with time. A dynamic ANN might be used for analysing dynamically variable information such as speech represented in the time domain. Full mesh usually implies a static ANN.

**E Training Sets and Training Algorithm**

Training involves starting with a random set of weights, applying a realistic set of inputs, determining an error by comparing the actual output to the desired outputs, and adjusting the weights according to the error. This process is continued iteratively until the error cannot be reduced further. The well known LMS (least mean squares) algorithm for adjusting the weights according to the errors, was used. Other algorithms are known and could be used.

**Operation of the ANN**

The frequency domain features 1 to N are input to respective nodes X1 to XN in the input layer. These nodes have a transfer function F(X) which is usually a sigmoid function, ( i.e. 1/(1-e exp(-x)). This means the output is limited to a saturation value, when the input is above a given threshold. The outputs of all the nodes of the input layer are fed to each of the nodes in the next layer, the hidden layer. For example, node Y1 of the hidden layer receives inputs from input nodes X1 to XN, each weighted by a respective weighting factor. The input from X1 is multiplied by weighting factor W11. The input from X2 is multiplied by weighting factor W21, and so on. All these inputs are summed, and the sum is passed through the transfer function F(Y) before being output. This transfer function is similar to F(X). The same operation is carried out for each of the nodes for the hidden layer, with different weighting factors being applied to each of the inputs of each of the nodes. According, node YN sums inputs X1 multiplied by W1N, and input from X2 multiplied by W2N and so on.

The outputs of the M hidden layer nodes Y1 to YM are fed to each of the nodes of the output layer. Again, weighting factors are applied to each of the input to the output layer nodes (not illustrated for the purpose of clarity).

The output layer nodes each have a transfer function F (Z) similar to F(X). Each of the nodes in the output layer, Z1 to ZP correspond to one of the predetermined frequencies of the tones being detected. The outputs are put through a further threshold function to convert them to a logical on or off to indicate whether that frequency has been positively identified. This threshold may be varied, depending on the output values of all the output nodes.

For DTMF tones, there should be just one of the column frequencies identified and one of the row frequencies identified. These logical outputs would be fed to the digit decode logic shown in Figure 5, which would output the identity of the digit.

In the arrangement shown in Figure 2, the tone detector 240 would output the digit to the packetiser 270, which would periodically send a packet identifying the digit represented by the tone, instead of sending raw information representing the signal including the tone. At the far end, the packet including the digit represented by the tone, would be recognised as a message, and sent to a tone generator (not illustrated) within the IWF at the far end, to enable the tone to be regenerated and added to the decoded signal, for forwarding to the far end receiving apparatus such as a telephone, fax or modem.

For the ANN shown, the total number of nodes equals N + M + P . The total number of multiplications for each frame equals (NxM) + (MxP) which equals M(N+P). This is the dominant component of the computation required, and so should be minimized.

**Other Examples, Variations**

Although the embodiments described show a telecommunication network in the form of a telephone network or a packet based data network, other types of network are conceivable.

Although the embodiments described show a feature extractor in the form of software for making a selection from DCT coefficients, based on predetermined criteria, other types are conceivable, such as adaptive selectors, or selection of time domain based features such as zero crossing rate or signal amplitude features.

Although the embodiments above include implementation by software running on a DSP, dedicated hardware could be used, implemented on one or more ASICs (Application Specific Integrated Circuit) for example.

Above has been described a tone detector for detecting a tone such a DTMF tone by converting the signal to the frequency domain, then extracting signal features to input to an artificial neural network. The neural network is trained to detect the tone, or detect which of many predetermined tones, is present. It can be arranged to operate more quickly than conventional tone detection methods. This is particularly significant for coding or compressing signals which contain tones and other information. Since it is often more efficient to code or compress such tones separately from the other information, it can be essential to detect and separate such tones very quickly to avoid the risk of a single tone being coded or compressed twice, particularly if the signal is delay sensitive. A telephone conversation is an example.

Other variations of the described embodiments, and other applications of the invention can be conceived and are intended to be within the scope of the claims. References to software are intended to encompass both software on a computer readable medium and software when delivered over a transmission medium.

**Claims**

1. A tone detector for detecting a tone having a pre-determined frequency profile, in an input signal, the detector comprising:

a feature extractor for extracting signal features present in the input signal, and
a discriminator for discriminating if the extracted features correspond to the pre-determined frequency profile, to detect the tone, wherein the discriminator comprises one or more artificial neural networks for carrying out the discriminating.

2. The tone detector of claim 1 wherein the signal feature comprises frequency domain parameters indicating a frequency profile of the input signal.

3. The tone detector of claim 1 or claim 2 wherein the detector is arranged to detect multi-frequency tones.

4. The tone detector of any preceding claim wherein the discriminator comprises two or more sub-discriminators, each for discriminating a subset of frequencies of the tones separately.

5. The tone detector of claim 3 or claim 4 when dependent on claim 3 wherein the tones comprise a multifrequency tone, the sub discriminators are arranged to discriminate separate parts of the frequency profile of the multi-frequency tone, and the detector further comprises a decoder to receive the separate parts and output an indication of which tone is detected.

6. The tone detector of claim 3 or claim 5 wherein the multifrequency tone comprises a DTMF tone.

7. The tone detector of any preceding claim wherein the feature extractor is arranged to carry out a discrete cosine transform operation to determine which frequencies are present.

8. The tone detector of any preceding claim wherein the artificial neural network comprises a multi-layer perceptron.

9. The tone detector of any preceding claim wherein the detector further comprises a candidate tone discriminator for separating candidate tones from other parts of the input signal, and inputting the candidate tones to the feature extractor.

10. A signal coder for coding signals comprising tones and other information, the tones having a pre-determined frequency profile, the signal coder comprising:

a tone detector as set out in claim 1 for detecting the tones in the signal,
an information coder for coding the information without the tones, and
a tone coder, for coding the tones differently to the information, the coder being arranged to output the differently coded tones and information.

11. A method of operating a telecommunications network to provide a subscriber of the network with a telecommunication service over at least part of the network, by transmitting a signal comprising a tone and information, for the subscriber, the tone having a pre-determined frequency profile, the network comprising a tone detector, as set out in claim 1.
wherein the method comprises the step of operating the network to cause the signal to be transmitted to the tone detector, and causing the tone detector to detect the tone in the signal.

12. A method carried out by a subscriber to a network, of using a telecommunication service provided over a telecommunications network, the network comprising a tone detector, as set out in claim 1 for detecting a tone having a pre-determined frequency profile;
and

the method comprising the step of using the telecommunication service so as to cause a signal comprising a tone to be transmitted to the tone detector, and causing the tone detector to operate to detect the tone.

13. Software for carrying out a method of detecting a tone in a signal, the tone having a pre-determined frequency profile, the method comprising the steps of:

extracting signal features present in the input signal, and
discriminating if the extracted features correspond to the pre-determined frequency profile, to detect the tone, using one or more artificial neural networks for carrying out the discriminating.

14. A data structure comprising a set of weighting coefficients for use in an artificial neural network to enable the artificial neural network to discriminate a tone having a predetermined frequency profile, in an input signal.

**Fig. 1**

22

IWF

EXPANDER TO
LINEARIZE ——200

BAND PASS
FILTER ——210

220

FAX/MODEM
IDLE SUPPRESSION

230

SPEECH
ACTIVITY/
SILENCE
DETECTOR

NON
SPEECH
PATHS

240

TONE
DETECTOR

270

PACKETIZER

FLAGS

250    260

ECAN    COMPRESSOR

SPEECH PATH

*Fig. 2*

_240_

CANDIDATE TONE DISCRIMINATION _300_

CANDIDATE
TONES
REPRESENTED
IN TIME DOMAIN

_310_

CONVERSION TO FREQUENCY DOMAIN

FREQUENCY
PROFILES

_320_

FEATURE EXTRACTION

FREQUENCY DOMAIN
FEATURES

_330_

TONE DISCRIMINATION USING A.N.N.

TONE IDENTITY

## Fig. 3

300

CANDIDATE TONE DISCRIMINATION

400

TIME DOMAIN SIGNAL

DETERMINE
OVERALL
SIGNAL
ENERGY

410

DETERMINE
SIGNAL
ENERGY
INBAND

420

DETERMINE
SIGNAL
ENERGY
OUTBAND

430

DETERMINE INBAND-OUTBAND
ENERGY RATIO

440

DETERMINE IF CANDIDATE TONE PRESENT

*Fig. 4*

330

TONE DISCRIMINATION USING A.N.N.

EXTRACTED FEATURES

500

510

| ANN FOR DISCRIMINATING COLUMN FREQUENCIES | ANN FOR DISCRIMINATING ROW FREQUENCIES |

520

DIGIT DECODING LOGIC

DIGIT

*Fig. 5*

Fig. 6